# EUROPEAN PATENT APPLICATION

(11) **EP 4 434 695 A1**
(43) Date of publication of application: **25.09.2024**
(21) Application number: 24158979.5
(22) Date of filing: 21.02.2024
(51) Int. Cl.: B26D 1/00, B23D 15/00, B26D 1/06, B26D 1/08, B26D 7/02, B26D 7/06, H01M 4/04, B65H 35/06, B23D 15/04, B26D 7/08

(54) **APPARATUS FOR MANUFACTURING ELECTRODE**

(30) Priority: 23.02.2023 KR 20230024546
(71) Applicant: SK On Co., Ltd., Seoul 03161 (KR)
(72) Inventor: JUNG, Jae Young, 34124 Daejeon (KR); CHO, Woo Yeon, 34124 Daejeon (KR)
(74) Representative: Stolmár & Partner Patentanwälte PartG mbB

(57) **Abstract**

The present disclosure relates to an apparatus for manufacturing an electrode, including: an inflow region where an electrode plate flows in; an outflow region where an electrode plate is cut into a preset size and flows out; a first cutter including a first cutting surface extending side by side along a movement direction of the electrode plate moving from the inflow region to the outflow region and an obliqued surface extending obliquely from one edge of the first cutting surface in a direction away from the electrode plate; and a second cutter supporting the electrode plate, wherein the first cutter moves along a direction in which the second cutter is positioned to pressurize the electrode plate to the first cutting surface.

## Description

### BACKGROUND OF THE INVENTION

### 1. Field

The present disclosure relates to an apparatus for cutting electrodes. In detail, it relates to an apparatus for manufacturing electrodes used in secondary batteries.

### 2. Description of the Related Art

Electrodes used in secondary batteries are manufactured by applying a slurry to a current collector including aluminum or copper. A slurry may include various materials such as an active material, a conductive material, and a binder. A binder can play the role or improving the binding force between a current collector and a slurry. When a small amount of binder is added, there is a high possibility that a current collector and an active material are detached or cracks are generated when cutting an electrode.

In particular, to increase the charging capacity of an electrode, it is necessary to relatively reduce the content of a binder. Therefore, there is a need for an electrode of excellent quality in which an active material is not detached even when the binder content is small. Therefore, there is an increasing demand for an apparatus for manufacturing electrodes exhibiting improved cutting quality.

### SUMMARY OF THE INVENTION

A problem that the present disclosure aims to solve is to provide an apparatus for manufacturing an electrode that improves electrode plate cutting quality by changing the shape of a cutter that cuts an electrode plate.

Another problem that the present disclosure aims to solve is to provide an apparatus for manufacturing an electrode that improves electrode plate cutting quality by further including a pusher pressurizing an electrode plate when cutting the electrode plate.

Still another problem that the present disclosure aims to solve is to provide an apparatus for manufacturing an electrode that can precisely cut an electrode plate while minimizing damage to the electrode plate by stopping the electrode plate when cutting the electrode plate.

The present disclosure can be widely applied in the field of green technology, such as electric vehicles, battery charging stations, solar power generation, and wind power generation using batteries. In addition, the present disclosure can be used in eco-friendly electric vehicles, hybrid vehicles, etc. to prevent climate change by suppressing air pollution and greenhouse gas emissions.

An apparatus for manufacturing an electrode according to the present disclosure includes: an inflow region where an electrode plate flows in; an outflow region where an electrode plate is cut into a preset size and flows out; a first cutter including a first cutting surface extending side by side along a movement direction of the electrode plate moving from the inflow region to the outflow region and an obliqued surface extending obliquely from one edge of the first cutting surface in a direction away from the electrode plate; and a second cutter supporting the electrode plate, wherein the first cutter moves along a direction in which the second cutter is positioned to pressurize the electrode plate to the first cutting surface.

The first cutter may further include a first extension surface extending perpendicular to the first cutting surface at one edge and the other edge of the first cutting surface.

The first cutting surface may face the electrode plate when the electrode plate is pressurized.

The first cutting surface may include a tunnel-shaped recession portion that is recessed away from the electrode plate and is formed side by side with the movement direction.

The recessed portion may include a first obliqued portion and a second obliqued portion, wherein each of the first obliqued portion and the second obliqued portion may be formed to have an angle formed with the electrode plate at a preset first angle.

The apparatus for manufacturing an electrode may further include: a first auxiliary obliqued portion obliquely connected to have an angle formed with the electrode plate at a preset second angle in a direction away from the electrode plate at one end of the first obliqued portion; and a second auxiliary obliqued portion that is oblique to have an angle formed with the electrode plate at a preset second angle in a direction away from the electrode plate at one end of the second obliqued portion and that extends toward the first auxiliary obliqued portion.

The first auxiliary obliqued portion and the second auxiliary obliqued portion may be connected.

In the first cutter, the distance from a connection line where first auxiliary obliqued portion and the second auxiliary obliqued portion meet to the first obliqued portion may be the same as the distance therefrom to the second obliqued portion.

The second angle may be smaller than the first angle.

The first angle may be 0.5 degrees to 1.5 degrees.

The second cutter may include a second cutting surface extending along the movement direction of the electrode plate.

The second cutter may further include a second extension surface extending perpendicular to the second cutting surface at one edge of the second cutting surface.

The apparatus for manufacturing an electrode may further include a pusher pressurizing an electrode plate, wherein the pusher may be positioned closer to the inflow region than the first cutter.

The pusher may be movable side by side with the movement direction of the first cutter.

Along the width direction of the electrode plate perpendicular to the movement direction of the electrode plate, the length of the pusher may be equal to or longer than the length of the first cutter.

Along a direction in which the first cutter moves from a virtual surface formed side by side to be spaced apart from the electrode plate in a preset distance, the length in which the first cutter is movable may be longer than the length in which the pusher is movable.

Along the movement direction of the electrode plate, the first cutter and the second cutter may be positioned to be spaced apart from each other in a preset interval.

When the movement of the electrode plate stops, the pusher may pressurize the electrode plate.

After the pusher pressurizes the electrode plate, the first cutter may pressurize the electrode plate.

Movement of the electrode plate from the inflow region toward the outflow region may be intermittent.

According to the present disclosure, an apparatus for manufacturing an electrode that improves electrode plate cutting quality by changing the shape of a cutter that cuts an electrode plate may be provided.

In addition, an apparatus for manufacturing an electrode that improves electrode plate cutting quality by further including a pusher pressurizing an electrode plate when cutting the electrode plate may be provided.

In addition, an apparatus for manufacturing an electrode that can precisely cut an electrode plate while minimizing damage to the electrode plate by stopping the electrode plate when cutting the electrode plate may be provided.

### BRIEF DESCRIPTION OF THE DRAWINGS

FIG. 1 shows an apparatus for manufacturing an electrode according to the present disclosure.
FIG. 2 shows a first cutter, a second cutter, and a pusher according to the present disclosure.
FIG. 3A and FIG. 3B show a first cutter according to the present disclosure.
FIG. 4 shows an enlarged view of region A of FIG. 3A according to the present disclosure.
FIG. 5 shows a second cutter and a pusher according to the present disclosure.

### DETAILED DESCRIPTION

Hereinafter, preferred embodiments of the present disclosure will be described in detail with reference to the attached drawings. The configuration or control method of the apparatus described below is only for explaining the embodiments of the present disclosure and is not intended to limit the scope of the present disclosure, and the same reference numerals used throughout the specification indicate the same components.

Specific terms used in the present specification are merely for convenience of explanation and are not used to limit the illustrated embodiments.

For example, expressions such as "same" and "is the same" not only indicate a strictly identical state, but also indicate a state in which there is a difference in tolerance or the degree to which the same function is obtained.

For example, expressions representing relative or absolute arrangement such as "in a certain direction," "along a certain direction," "side by side," "perpendicularly," "at the center," "concentric," or "coaxial," not only strictly represent the arrangement, but also represent the state of relative displacement with a tolerance, or an angle or distance at which the same function is obtained.

To explain the present disclosure, it will be described below based on a spatial orthogonal coordinate system with X, Y, and Z axes orthogonal to each other. Each axis direction (X-axis direction, Y-axis direction, Z-axis direction) refers to both directions in which each axis extends.

The X-direction, Y-direction, and Z-direction mentioned below are for explanation so that the present disclosure may be clearly understood, and of course, the directions may be defined differently depending on where the reference is placed.

The use of terms such as 'first, second, and third' in front of the components mentioned below is only to avoid confusion about the components to which they are referred and is irrelevant to the order, importance, or master-slave relationship between the components, etc. For example, an invention that includes only a second component without a first component may also be implemented.

As used in this specification, singular expressions include plural expressions unless the context clearly dictates otherwise.

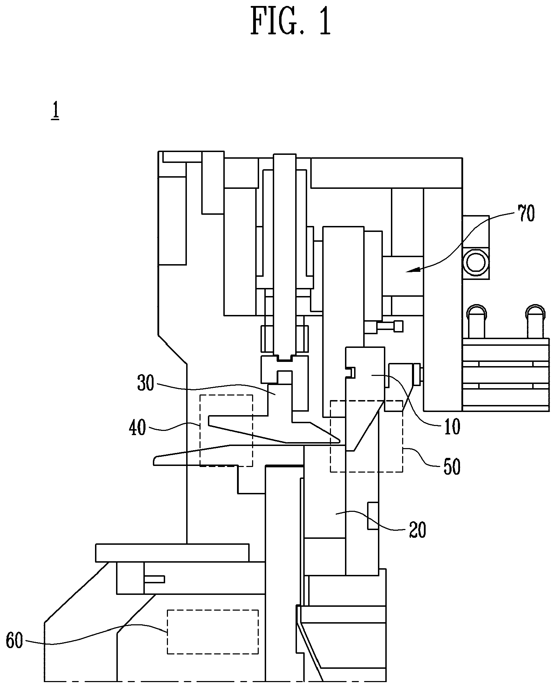

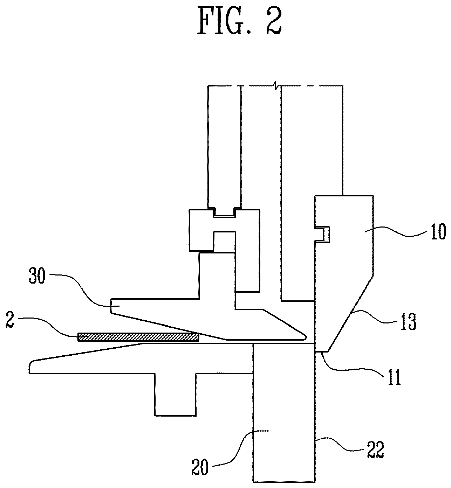

FIG. 1 shows an apparatus for manufacturing an electrode 1 according to the present disclosure; and FIG. 2 shows a first cutter 10, a second cutter 20, and a pusher 30 according to the present disclosure.

The present specification shows an apparatus for manufacturing an electrode 1 in which a first cutter 10 is positioned at an upper portion and a second cutter 20 is positioned at a lower portion. In the present specification, for convenience of explanation, it is assumed that a first cutter 10 is positioned at an upper portion and a second cutter 20 is positioned at a lower portion. Components included in a first cutter 10, a second cutter 20, and an apparatus for manufacturing an electrode 1 may be disposed differently from the drawings.

Referring to FIGS. 1 and 2, an apparatus for manufacturing an electrode 1 according to the present disclosure includes an inflow region 40, an outflow region 50, a first cutter 10, and a second cutter 20, wherein the first cutter 10 may move along a direction in which the second cutter 20 is positioned to pressurize an electrode plate 2 with the first cutter 10.

An apparatus for manufacturing an electrode 1 includes an inflow region 40 where an electrode plate 2 flows in and an outflow region 50 where an electrode plate 2 is cut into a preset size and flows out. An electrode plate 2 may be cut by an apparatus for manufacturing an electrode 1 through an inflow region 40 and then flow out into an outflow region 50. The movement direction of an electrode plate 2 may be from an inflow region 40 toward an outflow region 50. An inflow region 40 may be in the form of an inlet. Alternatively, when an electrode plate 2 moves in an apparatus for manufacturing an electrode 1, a region before cutting may be referred to as an inflow region 40. An outflow region 50 may be in the form of an outlet. Alternatively, when an electrode plate 2 moves, a region after cutting may be referred to as an outflow region 50.

For example, an inflow region 40 may be provided with a roll feeder or a belt feeder. An electrode plate 2 may be disposed on a roll feeder. When the roll feeder operates, the electrode plate 2 may move.

The movement of an electrode plate 2 from an inflow region 40 toward an outflow region 50 may be intermittent. An electrode plate 2 can repeatedly move and stop according to a preset time interval. For example, an electrode plate 2 may move along a movement direction for a certain period of time and then stop. An electrode plate 2 can repeatedly move and stop according to a preset distance. For example, an electrode plate 2 may stop after moving a certain distance along a movement direction. After an electrode plate 2 stops, the electrode plate 2 may be cut by a first cutter 10 and a second cutter 20. After an electrode plate 2 is cut, he electrode plate 2 may move again.

An apparatus for manufacturing an electrode 1 may include a first cutter 10 including a first cutting surface 11 extending side by side along a movement direction of an electrode plate 2 moving from an inflow region 40 to an outflow region 50 and an obliqued surface 13 extending obliquely from one edge of the first cutting surface 11 in a direction away from the electrode plate 2. A first cutter 10 may move along a direction in which a second cutter 20is positioned to pressurize an electrode plate 2. A first cutter 10 may cut an electrode plate 2 by pressurizing the electrode plate 2. A first cutting surface 11 may face an electrode plate 2 when the electrode plate 2 is pressurized. For example, a first cutter 10 may move from top to bottom to pressurize an electrode plate 2. A first cutting surface 11 may be positioned below a first cutter 10 to face and contact an electrode plate.

A first cutting surface 11 extend side by side in a movement direction of an electrode plate 2. As the pressure received by an electrode plate 2 is uniformly distributed over the entire region of a cutting surface, the cutting quality of the electrode plate 2 can be improved. Conventionally, a first cutting surface 11 does not extend side by side in a movement direction of an electrode plate 2, and thus a first cutting surface 11 pressurizes only a very narrow region of an electrode plate 2. At this time, in the case of an electrode plate 2 with a small amount of binder added, the current collector and the active material may be separated due to cutting. In the present disclosure, by extending a first cutting surface 11, the pressure received by an electrode plate 2 can be reduced and the cutting quality of an electrode plate 2 can be improved by preventing detachment of an active material.

A first cutter 10 includes an obliqued surface 13 extending from one edge of a first cutting surface 11. An obliqued surface 13 may form a slope in a direction away from an electrode plate 2. An obliqued surface 13 may be formed to extend along the direction of movement. Referring to FIG. 1, an electrode plate 2 may move from the left side to the right and an obliqued surface 13 may be formed by extending from the right edge of a first cutting surface 11.

An apparatus for manufacturing an electrode 1 includes a second cutter 20 supporting an electrode plate 2. A second cutter 20 may support an electrode plate 2 when a first cutter 10 pressurizes the electrode plate 2. An electrode plate 2 may be interposed between a first cutter 10 and a second cutter 20. When a second cutter 20 supports one side of an electrode plate 2, a first cutter 10 may pressurize the other side of the electrode plate 2. For example, when a second cutter 20 supports a lower surface of an electrode plate 2, a first cutter 10 may pressurize an upper surface of the electrode plate 2. A second cutter 20 may include a flatly formed surface to support an electrode plate 2.

A first cutter 10 may move along a direction in which a second cutter 20 is positioned to pressurize an electrode plate 2 with a first cutting surface 11. A first cutter 10 may perform a reciprocating motion. A first cutter 10 may move perpendicular to a movement direction of an electrode plate 2. For example, a first cutter 10 may move downward to pressurize an electrode plate 2. A first cutter 10 may move downward and then move upward.

Along a movement direction of an electrode plate 2, a first cutter 10 and a second cutter 20 may be positioned to be spaced apart from each other in a preset interval. That is, even when a first cutter 10 moves toward a second cutter 20, the first cutter 10 and the second cutter 20 may not contact each other. A first cutter 10 and a second cutter 20 may not overlap along a direction perpendicular to the movement direction of the electrode plate 2. For example, even when a first cutter 10 moves in a reciprocating manner along a direction perpendicular to the movement direction of the electrode plate 2, it may not collide with a second cutter 20. A preset interval may be smaller than an extended length of a first cutting surface 11. A preset interval may be formed to be equal to or greater than the thickness of an electrode plate 2. When a preset gap is smaller than the thickness of an electrode plate 2, damage may occur in an apparatus for manufacturing an electrode 1. When a first cutter 10 and a second cutter 20 are positioned beyond a preset interval, cutting quality may deteriorate.

Referring to FIG. 1, an apparatus for manufacturing an electrode 1 may further include a control portion 60. A control portion 60 may control the operation of components of an apparatus for manufacturing an electrode 1. A control portion 60 may control the movement and stop of a first cutter 10 and a second cutter 20. A control portion 60 may control the operation of other components included in an apparatus for manufacturing an electrode 1. A control portion 60 may be positioned inside or outside an apparatus for manufacturing an electrode 11.

Referring to FIG. 1, an apparatus for manufacturing an electrode 1may further include a driving portion 70. A driving portion 70 may move components of an apparatus for manufacturing an electrode 1, including a first cutter 10 and a second cutter 20. For example, a driving portion 70 may be a motor. When a motor operates, a first cutter 10 may upward and downward in a reciprocating manner.

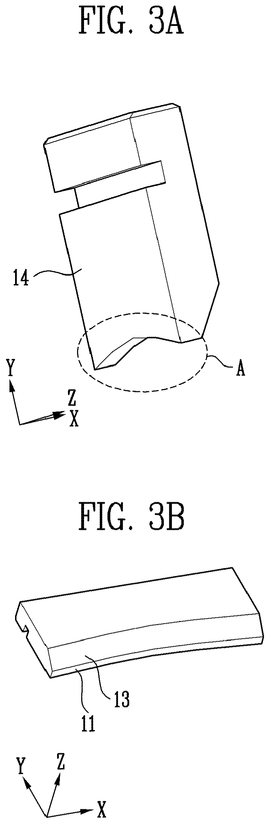

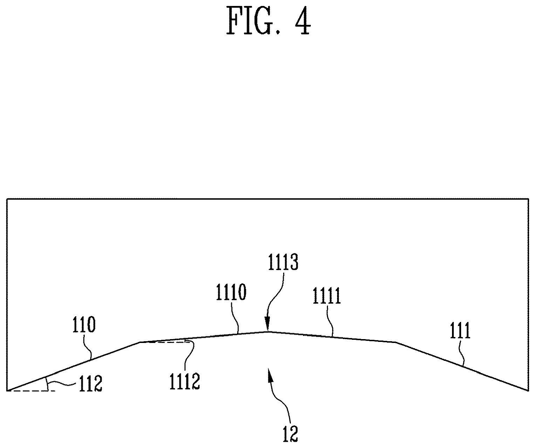

FIG. 3A and FIG. 3B show a first cutter 10 according to the present disclosure; and FIG. 4 shows an enlarged view of region A of FIG. 3A according to the present disclosure.

Referring to FIG. 3A and FIG. 3B, a first cutter 10 may further include a first extension surface 14 extending perpendicular to a first cutting surface 11 at one edge and the edge of the first cutting surface 11. The other edge of a first cutting surface 11 may be positioned to face one edge of the first cutting surface 11. For example, one edge of a first cutting surface 11 may be positioned on the right side of the first cutting surface 11, and the other edge of the first cutting surface 11 may be positioned on the left side of the first cutting surface 11.

Ultimately, in a first cutter 10, as a first cutting surface 11 and an first extension surface 14 are formed to be perpendicular, the cutting quality of an electrode plate 2 may be improved.

Referring to FIG. 3B, a first cutting surface 11 may include a tunnel-shaped recessed portion 12 that is recessed away from an electrode plate 2 and is formed side by side in a movement direction of the electrode plate 2. A recessed portion 12 may form a gentle curve. Alternatively, a recessed portion 12 may include a straight obliqued portion. A recessed portion 12 may be in contact with an electrode plate 2.

Referring to FIG. 4, a recessed portion 12 may include a first obliqued portion 110 and a second obliqued portion 111, and each of a first obliqued portion 110 and a second obliqued portion 111 may be formed to have an angle formed with an electrode plate 2 at a preset first angle 112. A first obliqued portion 110 and a second obliqued portion 111 may be formed in symmetrical shapes. A first obliqued portion 110 may extend by forming a preset first angle 112 at one end of a first cutting surface 11, and a second obliqued portion 111 may extend by forming a preset first angle 112 at the other end of the first cutting surface 11. One end of a first obliqued portion 110 and one end of a second inclined portion 111 may be connected. A region where a first obliqued portion 110 and a second obliqued portion 111 are connected may be the center of a recessed portion 12.

Referring to FIG. 4, an apparatus for manufacturing an electrode may further include: a first auxiliary obliqued portion 1110 obliquely connected to have an angle formed with an electrode plate 2 at a preset second angle 1112 in a direction away from the electrode plate 2 at one end of a first obliqued portion 110; and a second auxiliary obliqued portion 1111 that is oblique to have an angle formed with the electrode plate 2 at a preset second angle 1112 in a direction away from the electrode plate 2 at one end of the second obliqued portion 1111 and that extends toward the first auxiliary obliqued portion 1110. The depth at which a recessed portion 12 is recessed may be formed differently depending on the position where a first auxiliary obliqued portion 1110 and the second auxiliary obliqued portion 1111 are formed.

A first auxiliary obliqued portion 1110 and a second auxiliary obliqued portion 1111 may be connected. One end of a first auxiliary obliqued portion 1110 and one end of the second auxiliary obliqued portion 1111 may be connected to form a connection line 1113. The distance from a connection line 1113 to a first obliqued portion 110 and the distance to the second obliqued portion 111 may be the same. Among directions formed perpendicular to a movement direction of an electrode plate 2, along a direction formed side by side with the electrode plate 2, a virtual central plane of a first cutter may be assumed at a position separated in a same distance from one end of the first cutter 10 and from the other end thereof. The virtual central plane may include a connection line 1113. The first cutter 10 may be formed to be symmetrical with respect to the virtual central plane. That is, a first obliqued portion 110 and a second obliqued portion 111 may have a same length, and a first auxiliary obliqued portion 1110 and a second auxiliary obliqued portion 1111 may have a same length.

A preset first angle 112 may be 0.5 degrees to 1.5 degrees. When the angle is out of the preset angle, the cutting quality may deteriorate. When a cutter with a slope that is gentler than 0.5 degrees or steeper than 1.5 is used, there is a risk that an electrode plate 2 is not be cut and an electrode plate 2 is torn apart or damaged.

A second angle 1112 may be formed to be smaller than a first angle 112. As a second angle 1112 is formed to be small and the slope is gentle, the pressure applied by the center of a recessed portion 12 on an electrode plate 2 may be relieved.

Specifically, it may be preferable that a first cutter 10 forms an angle in which a first angle 112 is 1.5 degrees and a second angle 1112 is half the first angle 112. As a second angle 1112 forms half the first angle 112, an electrode plate 2 may be sequentially cut from the outside to the center, and no damage may occur to the electrode plate 2 that is pressurized toward the center of a recessed portion 12.

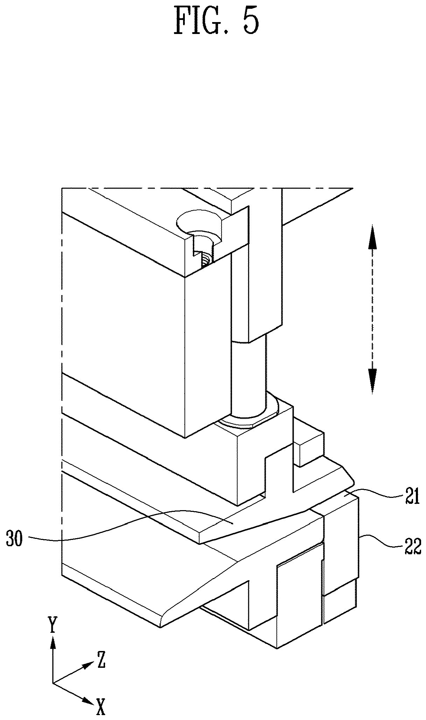

FIG. 5 shows a second cutter 20 and a pusher 30according to the present disclosure.

A second cutter 20 may include a second cutting surface 21 extending along a movement direction of an electrode plate 2. One side of an electrode plate 2 may be supported by a second cutting surface 21. A second cutter 20 may further include a second extension surface 22 extending perpendicular to a second cutting surface 21 at one edge of the second cutting surface 21. A second extension surface 22 may be formed closer to an outflow region 50 than an inflow region 40. That is, a first cutting surface 11 and a first extension surface 14 may formed to be perpendicular, and in a second cutter 20, a second cutting surface 21 and a second extension surface 22 may formed to be perpendicular.

An apparatus for manufacturing an electrode 1 may further include a pusher 30 pressurizing an electrode plate 2. A pusher 30 may fix an electrode plate 2 by pressurizing an electrode plate 2. When an electrode plate 2 is fixed during cutting, the cutting quality can be improved. A pusher 30 may be positioned closer to an inflow region 40 than a first cutter 10. A pusher 30 may be positioned upstream of a movement path formed along the movement direction of the electrode plate 2.

Referring to FIG. 5, a pusher 30 may be movable side by side with a movement direction of a first cutter 10. A pusher 30 may pressurize an electrode plate 2. A pusher 30 may be in close contact with a second cutter 20.

A pusher 30 may move side by side with a first cutter 10. For example, as a first cutter 10 moves downward toward a second cutter 20, at the same time, a pusher 30 may also move downward. Referring to FIG. 5, a first cutter 10 and a pusher 30 may move along the Y-direction. A pusher 30 may include an elastic member (not shown) therein. An electrode plate 2 may be pressurized at a certain pressure through an elastic member.

Along a direction in which a first cutter 10 moves from a virtual surface formed side by side to be spaced apart from an electrode plate 2 in a preset distance, the length in which a first cutter 10 moves may be equal to or longer than the length in which a pusher 30 moves. For example, a first cutter 10 and a pusher 30 may be positioned above an electrode plate 2 and spaced apart by a same distance. A first cutter 10 and a pusher 30 may move downward simultaneously through a driving portion 70. The movement distance of a first cutter 10 may be longer than the movement distance of a pusher 30. Ultimately, a first cutter 10 may move lower than a pusher 30, and an electrode plate 2 may be thereby pressurized. That is, an electrode plate 2 may be pressurized to be cut.

Along the width direction of an electrode plate 2 perpendicular to the movement direction of the electrode plate, the length of a pusher 30 may be equal to or longer than the length of the electrode plate 2 in the width direction. Through this, even when a first cutter cuts an electrode plate 2 from an edge of the electrode plate 2, the electrode plate may not move. In other words, even when an electrode plate 2 receives pressure from the outside, as the position is fixed and does not move, it will be cut precisely.

Along the width direction perpendicular to a movement direction of an electrode plate 2, a first cutter 10 may pressurize the electrode plate 2. When pressurizing, a pusher 30 will also pressurize the electrode plate 2 side by side with the first cutter 10. Therefore, a pusher 30 pressurizing an electrode plate 2 needs to be formed to be longer than a first cutter 10 in order to play the role of pressurizing the electrode plate 2 when cutting the electrode plate 2.

When the movement of an electrode plate 2 stops, a pusher 30 may pressurize an electrode plate 2. An electrode plate 2 may move along a movement direction and may repeat moving and stopping in a preset interval. When the movement of an electrode plate 2 stops, a pusher 30 may pressurize the electrode plate 2 to fix the electrode plate 2. After a pusher 30 pressurize an electrode plate 2, a first cutter 10 may pressurize the electrode plate 2. An electrode plate 2 may be fixed due to the pressure of a pusher 30, and a first cutter 10 may pressurize the electrode plate 2. Even when a first cutter 10 pressurizes an electrode plate 2, as the position of the electrode plate 2 is fixed by a pusher 30, the electrode plate 2 can be accurately cut.

The present disclosure may be modified and implemented in various forms, and its scope is not limited to the embodiments described above. Therefore, if a modified embodiment includes components of the present disclosure, it should be regarded as falling within the scope of the rights of the present disclosure.

## Claims

1. An apparatus for manufacturing an electrode, comprising:
an inflow region where an electrode plate flows in;
an outflow region where an electrode plate is cut into a preset size and flows out;
a first cutter including a first cutting surface extending side by side along a movement direction of the electrode plate moving from the inflow region to the outflow region and an obliqued surface extending obliquely from one edge of the first cutting surface in a direction away from the electrode plate; and
a second cutter supporting the electrode plate,
wherein the first cutter moves along a direction in which the second cutter is positioned to pressurize the electrode plate to the first cutting surface.

2. The apparatus for manufacturing an electrode according to claim 1, wherein the first cutter further includes a first extension surface extending perpendicular to the first cutting surface at one edge and the other edge of the first cutting surface.

3. The apparatus for manufacturing an electrode according to claims 1 or 2, wherein the first cutting surface faces the electrode plate when the electrode plate is pressurized.

4. The apparatus for manufacturing an electrode according to any one of the preceding claims, wherein the first cutting surface includes a tunnel-shaped recession portion that is recessed away from the electrode plate and is formed side by side with the movement direction.

5. The apparatus for manufacturing an electrode according to claim 4, wherein the recessed portion includes a first obliqued portion and a second obliqued portion, wherein each of the first obliqued portion and the second obliqued portion is formed to have an angle formed with the electrode plate at a preset first angle.

6. The apparatus for manufacturing an electrode according to claim 5, further comprising:
a first auxiliary obliqued portion obliquely connected to have an angle formed with the electrode plate at a preset second angle in a direction away from the electrode plate at one end of the first obliqued portion; and
a second auxiliary obliqued portion that is oblique to have an angle formed with the electrode plate at a preset second angle in a direction away from the electrode plate at one end of the second obliqued portion and that extends toward the first auxiliary obliqued portion.

7. The apparatus for manufacturing an electrode according to claim 6, wherein the first auxiliary obliqued portion and the second auxiliary obliqued portion are connected.

8. The apparatus for manufacturing an electrode according to claims 6 or 7, wherein the second angle is smaller than the first angle.

9. The apparatus for manufacturing an electrode according to any one of claims 5 to 8, wherein the first angle is 0.5 degrees to 1.5 degrees.

10. The apparatus for manufacturing an electrode according to any one of the preceding claims, wherein the second cutter includes a second cutting surface extending along the movement direction of the electrode plate, and a second extension surface extending perpendicular to the second cutting surface at one edge of the second cutting surface

11. The apparatus for manufacturing an electrode according to any one of the preceding claims, further comprising: a pusher pressurizing an electrode plate, wherein the pusher may be positioned closer to the inflow region than the first cutter.

12. The apparatus for manufacturing an electrode according to any one of the preceding claims, wherein along the movement direction of the electrode plate, the first cutter and the second cutter is positioned to be spaced apart from each other in a preset interval.

13. The apparatus for manufacturing an electrode according to claims 11 or 12, wherein, when the movement of the electrode plate stops, the pusher pressurizes the electrode plate.

14. The apparatus for manufacturing an electrode according to any one of claims 11 to 13, wherein, after the pusher pressurizes the electrode plate, the first cutter pressurizes the electrode plate.

15. The apparatus for manufacturing an electrode according to any one of preceding claims, wherein movement of the electrode plate from the inflow region toward the outflow region is intermittent.
